Europäisches Patentamt

(19) European Patent Office

Office européen des brevets

(11) Publication number: **0 067 316**
**A2**

(12) # EUROPEAN PATENT APPLICATION

(21) Application number: **82104225.6**

(22) Date of filing: **14.05.82**

(51) Int. Cl.³: **H 04 N 5/02**

(30) Priority: **11.06.81 IT 4571881**

(43) Date of publication of application:
**22.12.82 Bulletin 82/51**

(84) Designated Contracting States:
**AT BE CH DE FR GB IT LI NL SE**

(71) Applicant: **ISTITUTO RICERCHE BIOMEDICHE**
**c/o Camera di Commercio via Oberdan, 24**
**I-33170 Pordenone(IT)**

(72) Inventor: **Abbate, Giampiero**
**Via Cavour 5**
**I-33080 Porcia (Pordenone)(IT)**

(72) Inventor: **Maddalena, Danilo**
**Via Meucci 3**
**I-33170 Pordenone(IT)**

(72) Inventor: **Vedovato, Francesco**
**Via E. Fermi 17**
**I-31040 Chiarano (Treviso)(IT)**

(74) Representative: **Busca, Luciano et al,**
**c/o Industrie Zanussi S.p.A. Servizio Brevetti e**
**Documentazione Via Giardini Cattaneo, 3**
**I-33170 Pordenone(IT)**

(54) Digital scan converter for video signals.

(57) Digital scan converter for transforming into a standard television signal an input video signal having different scanning characteristics. It includes an analogue to digital converter (2) supplied with the input signal and driving a main memory (8) as determined by a write-address generator (27). The main memory drives an output digital to analogue converter (13) as determined by a read-address generator (37). A multiplexer (9) alternately connects the address generators with memory (8) according to a clock signal.

A FIFO memory (4) stores data from converter (2) at the scanning rate of the input signal and supplies them to the main memory at the clock signal rate. If the input signal scanning is other than a cartesian scanning, memory (8) is written by columns and read by rows.

A couple of parallel connected FIFO memories (11, 12) alternately connect the main memory to converter (13) and supply the output data with a timing which is variable in order to restore the input signal.

EP 0 067 316 A2

Fig.1

- 1 -

DESCRIPTION

DIGITAL SCAN CONVERTER

FOR VIDEO SIGNALS.

The present invention relates to a digital scan converter for video signals which is capable of providing output video signals whose scanning is of the standard television kind, that is with a given number of fields per second and a given number of lines per field.

As is known, the characteristics of the television scanning (number of lines per field and number of fields per second) may vary in dependence on the different kinds of application.

Moreover, in some cases the image scanning may be other than the television scanning; in the medical field, for instance, particularly in cardiology, polar scanning, instead of television scanning, is used for obtaining echographic images.

It is known that in any case there is the need of displaying the images on TV monitors and/or recording them by means of common video recorders, which operate according to a predetermined television standard, e.g. having 625 lines per field and 50 fields per second.

The known digital scan converters include, basically, an input analogue to digital converter, a RAM memory device (usually a multiple device), an output digital to analogue converter, and logic control means capable of generating the various addresses for writing and reading the memory units, as well as the clock signals for the whole scan converter.

As is known, digital converters of this kind are relatively complicated and unreliable and, usually, can only convert input television signals having given characteristics into standard output television signals having different time basis.

More particularly, the above converters can not provide with sufficient precision a standard output television signal when the input signal is obtained with a polar scanning, which shows completely different characteristics.

Therefore, one object of the present invention is to provide a digital scan converter capable of transforming into a standard output television signal having good image resolution an input video signal whose scanning is of different kind, particularly of the polar kind.

Another object of the present invention is to provide a digital scan converter of the kind mentioned above, which is relatively simple in construction and can also supply a standard output television signal having good image resolution, starting from an input television signal having different time basis.

According to the invention, these objects are attained in a digital scan converter for transforming into a standard television signal an input video signal whose scanning is of different kind, including an analogue to digital converter capable of sampling each line of said input signal and writing the sample data, as determined by a write-address generator, into main memory means which in turn can drive an output digital to analogue converter, as determined by a read-address generator, with the previously stored data.

Logic write-control means and read-control means are provided for timing the scan converter. This latter is characterized, basically, in that it further comprises a multiplexer capable of alternately connecting said address generators to the main memory means according to a clock signal which is generated by said logic read-control means and defines alternating periods of writing and reading operation of the main memory means.

The main memory means is written by the analogue to digital converter through FIFO memory means which are driven by the logic write-control means for storing data from the analogue to digital converter at the scanning rate of the input signal and supplying them to the main memory means at the clock signal rate.

Furthermore, for the conversion of an input signal whose scanning is other than a cartesian scanning, for example a polar scanning, said main memory means is controlled by the write-address generator to be written by columns with data from the FIFO memory means, whereas it is controlled by the read-address generator for releasing by rows the so stored data. Accordingly, the scan converter according to the invention is further characterized in that said main memory means is connected to the digital to analogue converter through at least two further parallel connected FIFO memory means which are actuable by the logic read-control means for alternately storing, row by row and synchronously with the said clock signal, the data from the main memory means.

Each one of said further FIFO memory means is read while the other one is being written, and vice-versa. Moreover, the further FIFO memory means are actuable by the logic read-control means for supplying the previously stored data to the digital to analogue converter with delay times, with respect to the start time of the lines of the output television signal, and for time periods which are variable for each line according to the scanning characteristics of the input video signal.

Therefore, the digital scan converter according to the invention shows a universal operation.

The invention will be further described by way of non-limiting example, with reference to the accompanying drawings in which:

Figure 1 shows the block diagram, including the basic components and connections, of a preferred embodiment of the digital scan converter according to the invention;

Figure 2 shows a polar diagram representing a video signal scanning to be converted;

Figure 3 diagrammatically shows the memory locations of a component forming part of the digital converter as in Figure 1;

Figure 4 diagrammatically shows the correlation between the video signal scanning as in Figure 2 and the corresponding output signal scanning as obtained by means of the digital converter of Figure 1.

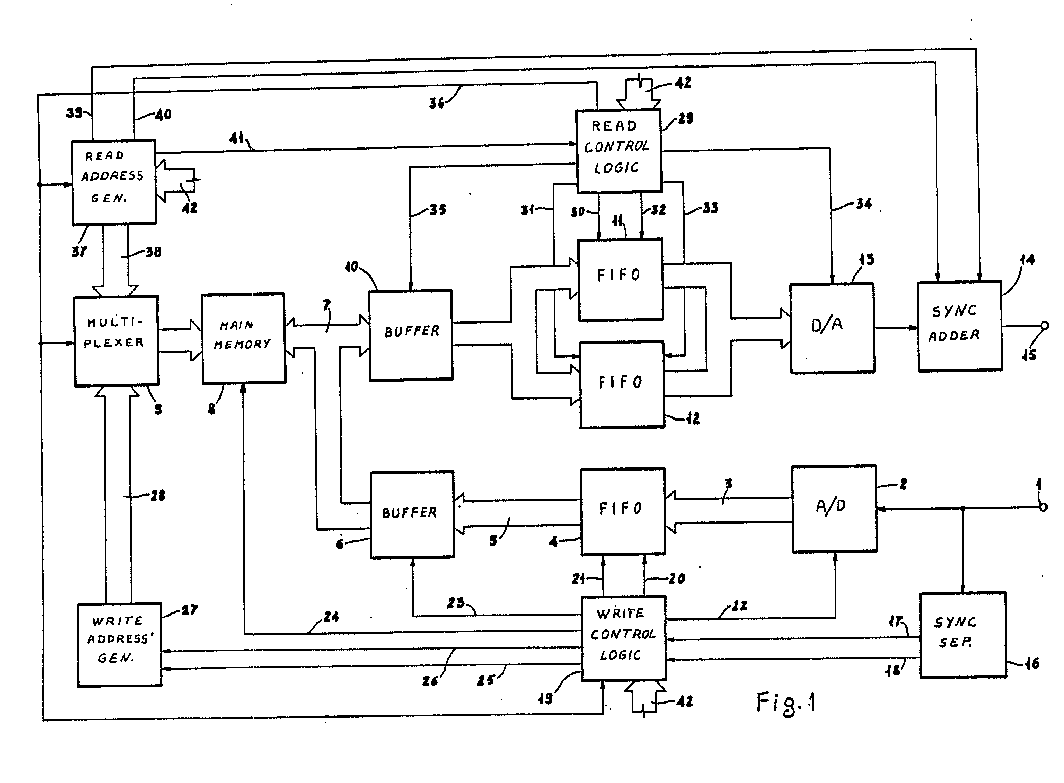

With reference to Figure 1, the digital scan converter according to the invention has an input terminal 1 corresponding to the input of an analogue to digital converter 2, the output of which drives via a data bus 3 a memory device 4 of the kind so called "FIFO" (First In - First Out).

The memory device 4 may comprise a set of integrated circuits, for example of the kind 67401 by Monolitic Memories, and is actuable for releasing at its output 5, in a controlled way and in the same sequence, the signals which are fed to its input 3. The output 5 of memory device 4 can drive a main memory stage 8, when it is operated in the writing mode, through a buffer 6. The main memory stage preferably consists of a plurality of static RAM memories, for example of the kind 2114 by Motorola. The memory stage 8 is controlled by means of a multiplexer 9 and, when it is operated in the reading mode, can drive at least two parallel connected FIFO memories 11, 12 via a data bus 7 and a buffer 10.

Memories 11 and 12 may be of the same kind as FIFO memory 4.

The common output of memories 11, 12 drives a digital to analogue converter 13, whose output in turn is connected with an output terminal 15 of the digital scan converter through a sync-pulses adder 14.

Input terminal 1 of the digital scan converter is also connected with the input of a sync separator 16, whose outputs 17 (for horizontal sync pulses) and 18 (for vertical sync pulses) drive corresponding inputs of a logic write-control stage 19. The logic stage 19 is of a kind known per sè (for example including a plurality of common integrated circuits, depending on the choice of a man skilled in the art) and is provided with a number of inputs and outputs for related signals.

In particular, it comprises two outputs 20, 21 capable of driving corresponding inputs of FIFO memory 4 with control signals for enabling the same memory 4 to store input data, and release the stored data, respectively. The logic stage 19 is further provided with an output 22 which drives converter 2 with a control signal having a given frequency (depending on the characteristics of the input video signal) whose value establishes the number of samples (image elements) into which each line of the video signal at the input terminal 1 is splitted by converter 2, in a way known per sè.

The stage 19 is also provided with an output 23 capable of generating a control signal which drives the buffer 6 for enabling it to supply the main memory 8 with data from bus 5.

A further output 24 of the logic stage 19 directly drives memory 8 with a control signal capable of switching it between the writing and reading modes of operation.

Finally, the logic stage 19 is provided with outputs 25, 26 which drive corresponding inputs of a write-address generator 27 with reset signals and address increment signals, respectively. In a known way, the reset signals at output 25 are capable of resetting the address generator 27 whenever the logic stage 19 detects, through outputs 17 and 18 of the sync separator 16, the start time of the first line of the video signal at input terminal 1.

Also in a known way, the address increment signals at output 26 increment the address generator 27 step-by-step, according to the occurrence of the samples into which converter 2 divides each line of the input video signal as determined by output 22 of the logic stage 19.

The write-address generator 27 is also known per sè and may consist of four counter units, for example of the kind 74LS161 by Texas Instruments. Generator 27 is capable of addressing the main memory 8 via a data bus 28 and the multiplexer 9.

The digital scan converter also includes a logic read-control stage 29, known per sè and similar to logic stage 19.

The logic stage 29 is provided with outputs 30, 31 which are capable of driving corresponding inputs od FIFO memories 11, respectively 12, with control signals for enabling the same memories to store input data. Likewise, the logic stage 29 comprises outputs 32, 33 which are capable of driving correspon ding inputs of FIFO memories 11, respectively 12, with control signals for enabling the same memories to release the formerly stored data. The above con trol signals at outputs 30, 31 and 32, 33 are genera ted alternately, two by two, for a line period; more particularly, they at first occur at outputs 30 and 33, then at outputs 31 and 32, and so on. That is to say that each one of FIFO memories 11 and 12 is ope rated in the reading mode while the other one is ope rated in the writing mode, and vice-versa.

The logic stage 29 is provided with a fur ther output 34 by means of which it can drive the digital to analogue converter 13 with a control si gnal having a predetermined frequency, depending on the scanning characteristics of the television signal one wishes to obtain at the output terminal 15. This predetermined frequency settles the rate at which con verter 13 restores according to a television raster the train of image elements from FIFO memories 11 and 12.

Another output 35 of the logic stage 29 is capable of driving buffer 10 with a control signal for enabling it to supply data from bus 7 to FIFO memories 11, 12 when the main memory 8 is being opera ted in the reading mode.

Finally, the logic stage 29 is provided with an output 36 for generating a clock signal; this latter is a square-wave shaped signal which determinates alternating and equal periods during which the main memory 8 is operated in the writing and reading modes, respectively.

Preferably, each one of such periods enables one image element to be stored into, or released from, the main memory, as it will be set forth hereinafter. Output 36 of the logic circuit 29 drives a read-address generator 37, which may advantageonsly consist of a so called "CRT controller", for example MC 6845 by Motorola.

The address generator 37 is capable of addressing the main memory 8 through a data bus 38 and the multiplexer 9. This latter in turn is driven by output 36 of the logic stage 29 in order to supply the main memory 8, for alternating and equal time periods, with write-addresses and read-addresses from the address generators 27 and 37, respectively.

Output 36 of the logic stage 29 also drives a corresponding input of the logic write-control stage 19 with the clock signal.

The read-address generator 37 is provided with two further outputs 39, 40 capable of driving corresponding inputs of the sync-pulses adder 14 with horizontal, respectively vertical, sync-pulses for the television signal to be obtained at the output terminal 15. Another output 41 of the address generator 37 supplies a corresponding input of the logic stage 29 with a timing signal capable of enabling the generation of the control signal at output 34 and defining, therefore, the useful period of each line of the output television signal which is produced by the scan converter.

The digital scan converter according to the invention finally includes a microprocessor (known per sè and not shown), for instance of the kind Z 80 by SGS-Ates.

The microprocessor may be programmed according to the type of conversion to be performed by the whole scan converter and is provided with an output 42 by means of which it can control, in a known way, the operation of logic write-control and read-control stages 19 and 29, as well as read-address generator 37.

In particular, the microprocessor controls handling of input signals and corresponding generation of output signals carried out by said logic stages 19, 29 and 37.

In operation, it is supposed that the input signal to be converted is a television signal having a time basis other than the one it is desired to obtain at the output terminal 15.

For simplicity sake, the various signals occurring in the block diagram of Figure 1 are not shown, as they are of well known kind and may be easily compared with each other by a man skilled in the art.

Depending on the control signal generated at output 22 by the logic stage 19, converter 2 splits each line of the input signal into a number of samples which are converted into digital levels. As determined by the sync pulses from outputs 17 and 18 of the sync separator 16, the logic stage 19 resets the write-address generator 27 (through output 25) at the start time of the first line of every field of the input television signal.

Moreover, logic stage 19 increments generator 27 through output 26, so that the sequential samples at output 3 of converter 2 correspond to respective incrementing addresses (starting from the first sample of the first line of the input television signal) for storing the same samples into the main memory 8. As already stated, the write-addresses produced by generator 27 and the read-addresses produced by generator 37 are fed to memory 8, alternately and for equal time periods, through the cyclically switching multiplexer 9 which is controlled by the clock signal from output 36 of the logic stage 29.

Memory 8 is read synchronously with the clock signal, which directly increments the read-address generator 37. On the contrary, due to the different time basis of the television signal at input 1, there is no synchronization between the samples from the output of converter 2 and the clock signal. Such a synchronization is performed by FIFO memory 4, into which the samples are temporarily stored at a rate, which is determined by the control signal at output 20 of the logic stage 19, and from which they are fed along bus bar 5 at the rate which is determined by the clock signal. As already stated, the writing and reading operations of FIFO memory 4 are controlled by outputs 20, 21, respectively, of the logic stage 19.

Particularly, output 21 operates synchronously with the clock signal.

When the logic stage 19 generates the control signal at output 21 it generates also, at the same time, a control signal at outputs 23 and 24. Therefore, buffer 6 enables the sample occurring along bus bar 5 to be stored into the relevant memory location of the main memory 8 which is addressed by the write-address generator 27. Thus, the video signal samples which are fed to FIFO memory 4 are sequentially stored into respective memory locations of the main memory 8 during writing periods which are determined by the clock signal.

During time periods equal to and alternating with the above writing periods, the clock signal prevents memory 8, through the logic stage 19, from being written and enables multiplexer 9 to drive the same memory 8 with the read-addresses which are from time to time produced by generator 37. The logic read-control stage 29 generates at output 35 the control signal which enables buffer 10 to supply towards converter 13 the data which are released by memory 8 with the same sequence and at the same rate as during writing thereof. At the same time, address generator 37 generates at output 41 the timing signal which enables the logic stage 29 to actuate converter 13 during the useful period of each line of the television signal to be obtained at the output terminal 15.

Thus, converter 13 re-converts into analogue samples the digital samples from memory 8. To the analogue signal from the output of converter 13 are then added, at stage 14, the horizontal and vertical sync-pulses from outputs 39 and 40 of generator 37, so as to obtain at the output terminal 15 a composite television signal corresponding to the input video signal but having the desired time basis.

It should be noticed that in this case the FIFO memories 11 and 12, which are connected between buffer 10 and converter 13, do not affect the operation of the scan converter and might be short-circuited. As stated above, in fact, the data which are released by memory 8 are fed to converter 13 alternately through the memories 11 and 12, for respective line periods.

It is now supposed that the input video signal is of the kind defined by a polar scanning, e.g. a video signal generated by means of an echograph.

This video signal is of the kind as shown in Figure 2, that is defined by a scanning which is characterized by a plurality of lines (for simplicity sake, only six lines are shown, respectively indicated with n, n1, n2, n3, n4, n5) extending from a common origin according to a polar diagram.

Also in this case the operation of the scan converter is substantially the same as described here inbefore, but for a few differences which will be set forth hereinafter.

Each one of the lines n to n5 is splitted by converter 2 into digital samples which are sequentially fed to memory 8, during the writing periods determined by the clock signal generated by logic stage 29, through FIFO memory 4 and buffer 6. In particular, FIFO memory 4 is controlled by logic stage 19 for performing the synchronization of the input samples with the clock signal, as already stated.

According to the above mentioned example, the samples of the input video signal are released from memory 8 with the same sequence as previously stored into it, whereas in case the video signal to be converted is defined by a polar scanning the samples are read in a sequence which is different than the writing sequence.

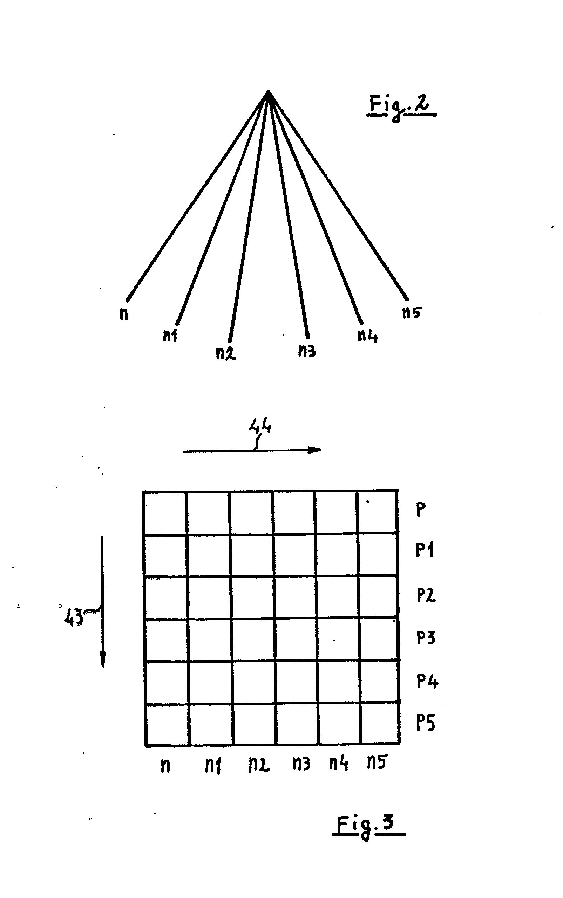

With reference to Figure 3, memory 8 is outlined including a plurality of memory locations (in the example shown, 36 locations are provided) which are defined by columns n to n5 and rows P to P5.

For converting the polar signal as in Figure 2, the samples into which such a signal is splitted are written into memory 8 by columns, for instance (i.e. line n of Figure 2 into column n of Figure 3, and so on), whereas they are read by rows P to P5.

Memory 8 is written and read in the directions indicated by arrows 43 and 44, respectively.

This specific operation of memory 8 may be carried out by keeping unchanged the sequence of the read-addresses which are produced by generator 37, while varying accordingly the sequence of the write--addresses which are produced by generator 27. In practice, there is only the need of simply changing the programming of the microprocessor, which controls generator 27 via outputs 25 and 26 of the logic stage 19. As is known, programming a microprocessor is a simple matter of choice for a man skilled in the art. The programming of the microprocessor also affects the operation of the logic read-control stage 29, which generates the control signals at outputs 32, 33 at a rate which decreases according to the characteristics of the polar signal as in Figure 2.

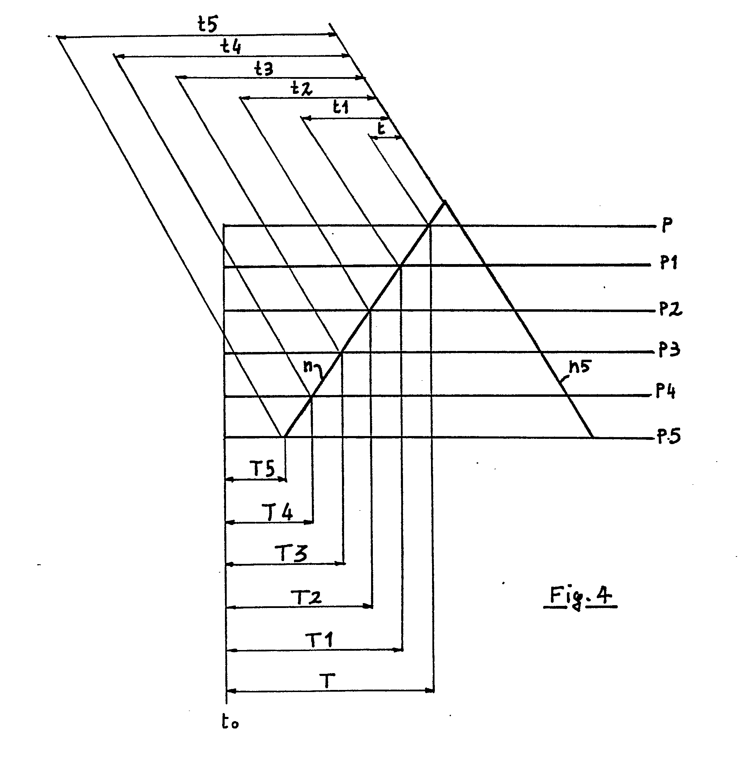

In Figure 4 only the first line n and the last line n5 of the polar signal to be converted are outlined together with the rows according to which the main memory 8 releases data for driving FIFO memories 11 and 12.

As already stated, FIFO memory 11 is written during reading of rows P, P2, P4 out of memory 8, whereas FIFO memory 12 is written during reading of rows P1, P3, P5. Furthermore, memory 12 is read out when memory 11 is being written, and vice-versa.

With reference to Figure 4, the timing signal which is produced at output 41 by generator 37 settles a reference start time to. With respect to time to, which represents the start time of each line of the output television signal, the control signals at outputs 32, 33 of the logic stage 29 are generated with delay times T to T5 which decrease for each row P to P5 according to the characteristics of the polar signal to be converted. Times t to t5 represent the increasing time periods during which FIFO memories 11 and 12 are alternately read out as determined by the above mentioned control signals. As a result, the image content of the input polar signal can be correctly restored in the output television signal.

The correlation of the different signals occurring in the scan converter is obtained by proper ly programming the microprocessor, which involves a relevant software not forming part of the present invention and therefore not described; in any case, it is a simple matter of choice for a man skilled in the art, as already stated.

Under rating conditions, for each row P to P5 the samples of the polar signal are fed from FIFO memories 11, 12 to the digital to analogue converter 13 with delay times T to T5 and for time periods t to t5 corresponding to the characteristics of the signal which is outlined in Figure 2.

As already stated, the converter 13 converts the digital samples from memories 11, 12 into analogue samples to which horizontal and vertical sync pulses are added at stage 14, forming in this way a standard television signal of the desired kind.

Summarizing, the input polar signal is stored in the form of samples into memory 8 according to a cartesian pattern; the samples are then read out, in order to produce a television signal, with a speed which changes so as to restore the image content of the input signal.

From the foregoing it is apparent that the objects of the present invention are attained in a digital scan converter which, by simply changing the programming of the microprocessor, can have a multi--mode operation.

Of course, the digital scan converter described above may undergo many modifications, without departing from the scopes of the invention. For example, the rates and time correlations of the various signals involved may be changed as it is thought best, in order to obtain at the output terminal 15 a television signal reproducing with good resolution the image content of the input video signal to be con verted.

## CLAIMS

1. Digital scan converter for transforming into a standard television signal an input video signal whose scanning is of different kind, including an analogue to digital converter capable of sampling each line of said input signal and writing the sample data, as determined by a write-address generator, into main memory means which in turn can drive an output digital to analogue converter, as determined by a read-address generator, with the previously stored data, logic write-control means and read-control means being provided for timing the scan converter, this latter being characterized in that it further comprises a multiplexer (9) capable of alternately connecting said address generators (27, 37) to the main memory means (8) according to a clock signal which is generated by said logic read-control means (29) and defines alternating periods of writing and reading operation of the main memory means, this latter being written by the analogue to digital converter (2) through FIFO memory means (4) which is driven by the logic write-control means (19) for storing data from the analogue to digital converter at the scanning rate of the input signal and supplying them to the main memory means (8) at the clock signal rate.

2. Digital scan converter according to claim 1, wherein the scanning of the input video signal is other than a cartesian scanning, said main memory means being controlled by the write-address generator to be written by columns with data from the FIFO memory means, whereas it is controlled by the read-address generator for releasing by rows the so stored data, characterized in that said main memory means (8) is connected to the digital to analogue converter (13) through at least two further parallel connected FIFO memory means (11, 12) which are actuable by the logic read-control means (29) for alternately storing, row by row (P to P5) and synchronously with the said clock signal, the data from the main memory means, each one of said further FIFO memory means (11, 12) being read while the other one is being written, and vice-versa, the further FIFO memory means also being actuable by the logic read-control means (29) for supplying the previously stored data to the digital to analogue con verter (13) with delay times (T to T5), with respect to the start time (to) of the lines of the output television signal, and for time periods (t to t5) which are variable for each line according to the scanning characteristics of the input video signal (n to n5).

Fig.1

0067316

Fig.2

Fig.3

Fig. 4